**Europäisches Patentamt**

**European Patent Office**

**Office européen des brevets**

(19)

(11) Veröffentlichungsnummer: **0 006 186**

**B1**

(12) **EUROPÄISCHE PATENTSCHRIFT**

(45) Veröffentlichungstag der Patentschrift: **24.02.82**

(51) Int. Cl.³: **H 04 Q 7/02**

(21) Anmeldenummer: **79101799.9**

(22) Anmeldetag: **07.06.79**

(54) **Rufverfahren.**

(30) Priorität: **20.06.78 DE 2826988**

(43) Veröffentlichungstag der Anmeldung:
**09.01.80 Patentblatt 80/1**

(45) Bekanntmachung des Hinweises auf die Patenterteilung:
**24.02.82 Patentblatt 82/8**

(84) Benannte Vertragsstaaten:
**AT DE FR IT NL**

(56) Entgegenhaltungen:
**DE - A - 2 042 710**
**DE - A - 2 056 349**
**DE - A - 2 128 204**

(73) Patentinhaber: **ROBERT BOSCH GMBH**
**Postfach 50**
**D-7000 Stuttgart 1 (DE)**

(72) Erfinder: **Dallmann, Horst**
**Wiersichweg 5**
**D-1000 Berlin 33 (DE)**

(74) Vertreter: **Schmidt, Hans-Ekhardt**
**Robert Bosch GmbH Geschäftsbereich Elektronik**
**Patent- und Lizenzabteilung Forckenbeckstrasse**
**9-13**
**D-1000 Berlin 33 (DE)**

Courier Press, Leamington Spa, England.

Rufverfahren

Die Erfindung geht von einem Rufverfahren nach der Gattung des Hauptanspruchs aus.

Rufverfahren für Funkteilnehmer stellen im allgemeinen kein besonderes Problem dar. Diese Rufverfahren zeichnen sich durch die Art des Rufes aus, wie zum Beispiel durch Einzeltonruf, Doppeltonruf, Tonfolgeruf und dergleichen. Alle diese Rufverfahren dienen dem einen Zweck, einen bestimmten Funkteilnehmer selektiv zu rufen. Dazu wird der Sender der ortsfesten Funkanlage mit einem bestimmten Selektivruf des mobilen Funkteilnehmers moduliert. Sobald der mobile Funkteilnehmer den Ruf empfängt, wird manuell oder automatisch eine selektive Rufquittung zur Funkzentrale zurückgesendet. Damit ist in der Funkzentrale zu erkennen, daß die gerufene Funkstation den Ruf identifiziert hat. Wenn nun die Rufquittung manuell abzugeben ist, dann kann aus dem Eintreffen der Rufquittung entnommen werden, daß der betreffende Funkteilnehmer, der die Funkstation bedient, zumindest noch soweit handlungsfähig ist, daß der Ruf zur Kenntnis genommen werden konnte.

In Diversity-Funknetzen, bei denen mehrere abgesetzte Sender auf der gleichen Frequenz betrieben werden, ist bekannt, daß der mobile Teilnehmer über einen "Sender-Suchlauf" (zum Beispiel DE - A - 15 91 144) nacheinander gerufen wird. Der sogenannte Sender-Suchlauf läßt auch als Teilnehmer-Suchlauf interpretieren, was bedeutet, daß der mobile Funkteilnehmer über eine erste Funkstation gerufen wird und dann daraufhin eine Rufquittung erwartet wird. Bleibt die Rufquittung aus, wird der Ruf über die zweite ortsfeste Station abgestrahlt und die Rufquittung abgewartet; usw.

Dieses Rufverfahren ist in Funknetzen mit automatischer Rufquittung, die unmittelbar nach Rufidentifizierung abgegeben wird, durchaus anwendbar. Wenn jedoch eine vom mobilen Funkteilnehmer beeinflußte Rufquittung bevorzugt wird, dann arbeitet dieses Rufverfahren oft zu langsam, weil zwischen zwei aufeinanderfolgenden Rufen eine Pause von bestimmter Länge zur Abgabe der beeinflußbaren Rufquittung durch den Funkteilnehmer vorzusehen ist. Dabei hat sich eine Pausenzeit von sechs bis acht Sekunden in derartigen Funknetzen als durchaus realistisch erwiesen.

Aus der DE - A - 21 28 204 ist ein Verfahren zum beschleunigten Verbindungsaufbau zwischen einer ortsfesten Fernsprechteilnehmerstation und einem beweglichen Funksprechteilnehmer unbekannten Standortes bekannt. Bei diesem Verfahren wird beispielsweise von einer ortsfesten Funkstation diejenige Hauptvermittlungsstelle angerufen, in deren Bereich sich eine gesuchte bewegliche Station vermutlich befindet. Die Hauptvermittlungsstelle versucht dan zunächst, über die nächstgelegene Überleitstelle die gesuchte Station zu finden. Wird die gesuchte Station nicht erreicht bzw. meldet sich diese Station nicht, so wird der Suchruf gestaffelt über die nächsten Vermittlungsstellen und deren Überleitstellen weitergeleitet, bis die gesuchte Station gefunden ist. Auch dieses Verfahren erfordert einen verhältnismäßig hohen Zeitaufwand, weil zwischen den einzelnen Suchrufen zwangsläufig Pausen liegen, in denen abgewartet wird, ob sich die gesuchte Station meldet.

Vorteile der Erfindung

Das erfindungsgemäße Rufverfahren mit den kennzeichnenden Merkmalen des Hauptanspruchs hat den Vorteil, daß die Belegungszeiten für die Funkanlage stark herabgesetzt werden. Als weiterer Vorteil ist anzusehen, daß aufgrund der Abgabe der Rufquittung Rückschlüsse auf die Einsatzbereitschaft der mobilen Funkteilnehmer möglich sind, so daß eine große Sicherheit für die Funkteilnehmer gegeben ist.

Durch die in dem Unteranspruch aufgeführten Merkmale ist eine vorteilhafte Ausgestaltung und Weiterbildung des im Hauptanspruch angegebenen Rufverfahrens sichergestellt.

Zeichnung

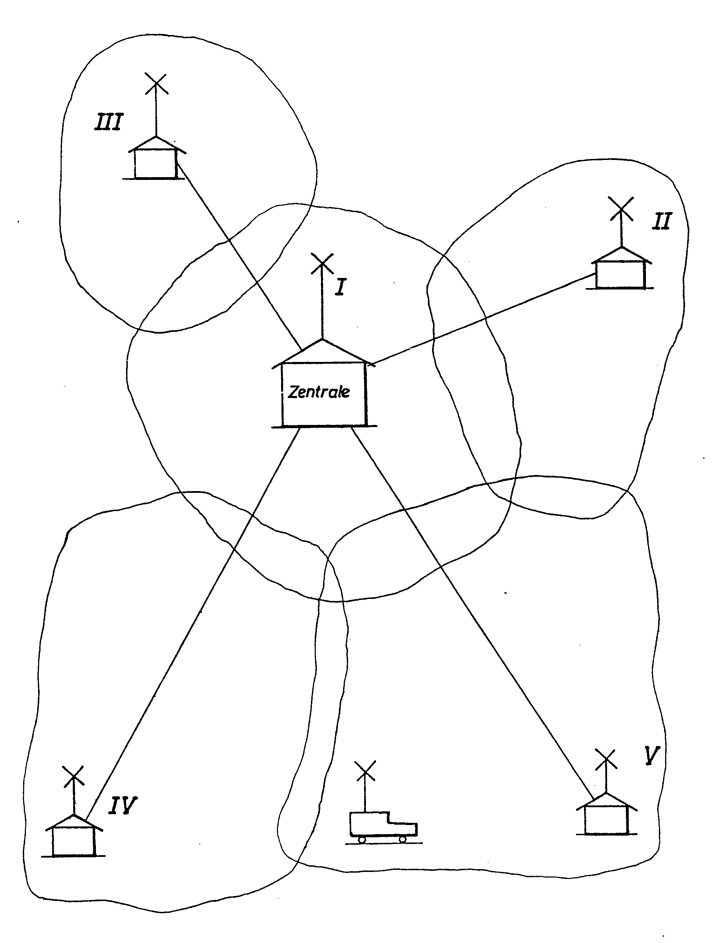

Die einzige Figur der Zeichnung zeigt ein Funknetz, an dem das erfindungsgemäße Rufverfahren näher erläutert wird.

Beschreibung der Erfindung

In der einzigen Figur der Zeichnung ist ein ortsfestes Funknetz mit fünf ortsfesten Funkstationen dargestellt, die an einer Funkzentrale angeschlossen sind und im Diversity-Betrieb auf derselben Frequenz arbeiten. Dabei weisen die einzelnen Funkstationen jeweils einen Funkbereich I bis V auf. Die Funkanlage wird im Simplexbetrieb eingesetzt und kann daher entweder nur senden oder empfangen. Darüber hinaus ist eine solche Funkanlage vor allem für einen Einsatz bei Überwachungsstellen vorgesehen, da nach einem selektiven Anruf eines Funkteilnehmers eine beeinflußbar abgegebene selektive Rufquittung erfolgt. Der selektive Anruf der mobilen Funkteilnehmer zur Abgabe der selektiven Rufquittung wird zyklisch durchgeführt und erreicht die mobilen Funkteilnehmer in sehr kurzer Zeit ohne eine Warteverzögerung.

Bei dem angenommenen Funknetz mit fünf ortsfesten Funkstationen, wie beispielsweise bei einem sehr schwer funktechnisch zu versorgenden Industriegelände mit Tiefgeschossen und metallverkleideten Hallen in der chemischen oder Automobil-Industrie, müßte bei den herkömmlichen Rufverfahren mit manueller Abgabe der Rufquittung allein eine Wartezeit von dreißig Sekunden im ungünstigen Fall in Kauf genommen werden, wenn der Anruf erst über die fünfte Funkstation in zeitlicher Reihenfolge bei einer Wartezeit von sechs Sekunden zwischen den einzelnen zyklisch aufeinanderfolgend abgegebenen Anrufen empfangen wird. Geht man bei der Art des Rufes von einem 5-Tonfolgeruf aus, dann sind noch weitere 2,5 Sekunden insgesamt für die einzelnen Rufe zur Wartezeit hinzuzuzählen, nämlich fünf mal 0,5 Sekunden pro 5-Tonfolgeruf, was im Verhältnis zur Wartezeit für die Abgabe der Rufquittung eine relativ kurze Zeit ist. Bei einer größeren Anzahl von Funkteilnehmern, die beispielsweise an ein Funknetz für Überwachungsstellen angeschlossen sind, bei dem durch zyklischen Anruf ständig die Bereitschaft der einzelnen Funkteilnehmer überprüft wird, können sich infolge der langen Wartezeiten für die Abgabe der Rufquittung schnell unzumutbare Zyklus-Wiederholzeiten ergeben.

Das erfindungsgemäße Rufverfahren für den selektiven Anruf von Funkteilnehmern mit einem nichtbekannten Standort in einem Funknetz mit zyklischem selektiven Aufruf der mobilen Funkteilnehmer und mit mehreren ortsfesten Sende-Empfangsstationen auf demselben HF-Kanal und mit Sendersuchlauf oder Teilnehmer-Suchlauf sieht nun vor, daß die Rufe ohne Wartezeit unmittelbar nacheinander über die einzelnen Sender abgestrahlt werden, wobei ein empfangener Selektivruf im Funkempfänger des gerufenen Funkteilnehmers einen Anrufton hervorruft, dessen Länge von der Anzahl der Sendestationen a abhängig ist und eine Dauer von mindestens (a—1) multipliziert mit der Zeit in Sekunden für das verwendete Rufsignal hat, und unmittelbar nach Ende des im Funkempfänger hervorgerufenen Anruftones die Anrufquittung gesendet wird. Dabei kann die Anrufquittung halbautomatisch gesendet werden, indem beispielsweise eine Tasteneinrichtung in Schließposition gehalten wird, oder es erfolgt eine manuelle Anrufquittung, indem eine Tasteneinrichtung betätigt wird.

Anhand des gewählten Beispiels mit fünf ortsfesten Funkstationen in einem Funknetz mit 5-Tonfolgeruf ergeben sich folgende Zeiten für Rufquittungen, wenn folgende zwei Fälle betrachtet werden:

1) Die mobile Funkteilnehmeranlage empfängt beispielsweise den ersten selektiven Aufruf der ersten ortsfesten Funkstation, wodurch ein Anrufton von (a—1)·0,5 s/Ruf gleich (5—1)·0,5 s gleich 2 Sekunden Dauer hervorgerufen wird. Danach wird sofort quittiert.

2. Die mobile Funkteilnehmeranlage empfängt beispielsweise den fünften selektiven Aufruf der fünften ortsfesten Funkstation, wobei ebenfalls ein Anrufton von zwei Sekunden Dauer hervorgerufen wird, jedoch bereits fünfmal aufgerufen wurde, so daß sich folgende Zeiten ergeben:

Aufrufzeit: $5 \times 0,5$ s $= 2,5$ s und

Anruftonzeit: $(5—1) \times 0,5$ s $= 2,0$ s.

Danach ist eine Abgabe der Rufquittung frühestens nach 4,5 Sekunden möglich.

Funknetze mit herkömmlichem Teilnehmer-Suchlauf unterscheiden sich hinsichtlich der zu erzielenden Belegungszeiten deutlich von dem erfindungsgemäßen Rufverfahren. Im Fall eines Empfangs des ersten Aufrufs durch die mobile Funkteilnehmeranlage ergibt sich zwar der gleiche Sachverhalt, als sofortige Abgabe der Rufquittung nach Ende des Anruftones, aber im Fall eines Empfangs erst des fünften (letzten) Aufrufs wirkt sich die bereits erwähnte Wartezeit von dreißig Sekunden Dauer aus, was in Funknetzen mit vielen Teilnehmern zu den geltend gemachten unzumutbaren Belegungszeiten der Funkanlage führt. Dieser Sachverhalt wird noch deutlicher, wenn berücksichtigt wird, daß über dieselbe Funkanlage neben dem zyklischen Aufruf der mobilen Funkteilnehmer des Funknetzes für die Überwachungsstellen auch noch der normale Betriebs-Sprechfunk des Genehmigungsinhabers abgewickelt werden soll. Hierbei ist es unabdingbar, daß die zugeteilte Frequenz für die entsprechenden Anforderungen nur für die unbedingt notwendige Zeit belegt wird. Für diese unabdingbare Forderung stellt das erfindungsgemäße Rufverfahren ein wirdkungsvolles Mittel dar, indem die Anrufe nacheinander ohne Wartezeit ausgesendet werden.

Darüber hinaus wird die Belegungszeit noch dadurch herabgesetzt, daß mehrere ortsfeste Funkstationen, die sich sendeseitig nicht überdecken und es daher beim Senden nicht zu Interferenzen kommen kann, den zyklischen Aufruf gleichzeitig aussenden, um die Zeit für einen Zyklusablauf noch weiter zu begrenzen. Dabei wird in der mobilen Funkstation nach einem ausgewerteten Selektivruf zur Abgabe der Rufquittung in vorteilhafter Weise ein Rufton erzeugt, der eine Mindestlänge gleich der Anzahl der rufenden Sendestationen minus eins mutlipliziert mit der Selektivruflänge in Sekunden des verwendeten Rufsignals aufweist. Der Faktor "minus eins" ergibt sich aufgrund der Tatsache, daß ein Rufton überhaupt erst nach einem einmaligen Aussenden eines Selektivrufes über eine Funkstation hervorgerufen werden kann, so daß bei einer Anzahl von rufenden Sendestationen stets eine erste Sendestation unberücksichtigt bleibt.

**Patentansprüche**

1. Rufverfahren für einen selektiven Anruf von Funkteilnehmern an einem unbekannten Standort innerhalb des Funkbereichs von Funknetzen mit zyklischem selektiven Aufruf der mobilen Funkteilnehmer auf demselben HF-Kanal und mit mehreren ortsfesten Sende-Empfangsstationen und mit Sendersuchlauf, dadurch gekennzeichnet, daß die Rufe ohne Wartezeit unmittelbar nacheinander über die einzelnen Sender (I, II, III...) abgestrahlt werden, daß durch einen empfangenen Selektivruf im Funkempfänger des gerufenen Funkteilnehmers automatisch ein Anrufton hervorgerufen wird, daß die Mindestzeit des Anruftones $(a-1) \cdot t_R$ ist, wobei; a gleich der Zahl der Sendestationen, und $t_R$ dis Dauer für ein Rufsignal ist und daß unmittelbar nach Ende des Anruftones eine halbautomatisch oder manuell ausgelöste Anrufquittung gesendet wird.

2. Rufverfahren nach Anspruch 1, dadurch gekennzeichnet, daß die Rufe von mehreren, sich sendeseitig nicht überdeckenden ortsfesten Funkstationen gleichzeitig ausgesendet werden.

**Revendications**

1. Procédé d'appel pour l'appel sélectif d'abonnés au radio-téléphone en un emplacement inconnu dans le domaine radiophonique de réseaux radiophoniques avec appel sélectif cyclique des abonnés au radio-téléphone mobiles sur le même canal HF et avec plusieurs postes émetteur: récepteurs à position fixe ainsi qu'avec processus de recherche d'émetteur, caractérisé en ce que les appels sont émis sans période d'attente immédiatement l'un après l'autre par les émetteurs individuels (I, II, III ...), en ce que par un appel sélectif reçu dans le récepteur radiophonique de l'abonné appelé, une tonalité d'appel est produite automatiquement, en ce que le temps minimal de la tonalité d'appel est $(a-1).t_r$, a étant égal au nombre des postes émetteurs et $t_R$ la durée d'un signal d'appel et en ce qu'immédiatement après la fin de la tonalité d'appel est émise une attestation d'appel déclenchée semi-automatiquement ou manuellement.

2. Procédé d'appel selon revendication 1, caractérisé en ce que les appels sont envoyés simultanément par plusieurs postes radiophoniques à position fixe ne se recouvrant pas côté émetteur.

**Claims**

1. A calling method for selectively calling radio subscribers at an unknown location within the radio range of radio networks, with cyclic selective calling of the mobile radio subscribers on the same HF channel, and having a plurality of stationary transmitter/receiver stations, and having transmitter search, characterised in that the calls are transmitted immediately one after the other without waiting time by the individual transmitters (I, II, III ...), that a call tone is automatically generated in the called subscriber's radio receiver by a received selective call, that the minimum time of the call tone is $(a-1).t_r$, a being equal to the number of transmitting stations and $t_r$ being the duration of a call signal, and that a semi-automatically or manually triggered call acknowledgement is transmitted immediately after the end of the call tone.

2. Calling method as claimed in claim 1, characterised in that the calls are simultaneously transmitted by a plurality of stationary radio stations which do not overlap one another with respect to their transmissions.

III

II

I

Zentrale

IV

V